# EUROPÄISCHE PATENTSCHRIFT

(11) **EP 3 683 470 B1**
(45) Veröffentlichungstag und Bekanntmachung des Hinweises auf die Patenterteilung: **03.01.2024**
(21) Anmeldenummer: 19203747.1
(22) Anmeldetag: 17.10.2019
(51) Int. Cl.: F16F 9/04, G09F 3/00

(54) **LUFTFEDER MIT EINEM KENNZEICHNUNGS- ODER DATENTRÄGER**
PNEUMATIC SPRING WITH AN IDENTIFICATION OR DATA CARRIER
RESSORT PNEUMATIQUE DOTÉ D'UN SUPPORT DE MARQUAGE OU DE DONNÉES

(30) Priorität: 20.12.2018 DE 102018222462
(43) Veröffentlichungstag der Anmeldung: 22.07.2020
(73) Patentinhaber: ContiTech Luftfedersysteme GmbH, 30165 Hannover (DE)
(72) Erfinder: Sachan, Naveen - c/o Continental AG, 30419 Hannover (DE)
(74) Vertreter: Continental Corporation

(56) Entgegenhaltungen:
- WO-A1-01/27905
- US-A1- 2006 169 386

## Beschreibung

Die Erfindung betrifft eine Luftfeder, angeordnet zwischen einer gefederten und einer ungefederten Masse, wobei die Luftfeder einen Luftfederbalg aufweist, der an seinen beiden Balgenden an jeweils einem Deckel bzw. einer Anschlussplatte luftdicht befestigt ist und Deckel bzw. Anschlussplatten als Verbindungselemente zur gefederten oder ungefederten Masse ausgebildet sind, wobei im Verbindungsbereich zwischen Balgende und gefederter oder ungefederter Masse ein mit einer Kennzeichnung oder einem Datum versehener Kennzeichnungs- oder Datenträger vorgesehen ist, vorzugsweise in Form einer eine Identifizierungskennzeichnung aufweisende Folie. Unter dem Begriff "Datum" oder "Kennzeichnung" ist hier jedwede Form von Information zu verstehen, die Daten, numerische oder alphanumerische Zeichen, Kodierungen oder Farbkennzeichnungen enthält, auch in Form von Barcodes, QR-Codes, Signierungen etc.

Luftfedern werden heute eingesetzt für z.B. LKW oder Schienenfahrzeuge zwischen gefederter Karosserie und ungefedertem Fahrwerksteil oder für industrielle Anwendungen, wie etwa für luftgefederte Maschinenlagerungen. Zwischen den Anschlussteilen steht der Luftfederbalg unter Innendruck, üblicherweise Luftdruck. Entsprechende Druckleitungen für die Luftzufuhr und Abfuhr sowie Ventilanordnungen und - regelungen und Zugehörige Sensorik und Steuerungen sind im Stand der Technik bekannt. Der Luftfederbalg kann dabei als Rollbalg ausgebildet sein und beim Einfedern an vorgesehenen Konturen oder Kolben abrollen, wie beispielsweise bei LKW üblich, er kann auch als Halbbalg oder Mehrfaltenbalg ausgebildet sein, wie oft bei Schienenfahrzeugen ausgeführt.

Zur Befestigung der Luftfeder an den Anschlussteilen gibt es unterschiedliche Möglichkeiten. Bei industrieller Anwendung, also etwa bei der Federung von Maschinen, weisen die zugehörigen Luftfederbälge üblicherweise an ihren Enden eine wulstartig umlaufende Verdickung mit einem eingebetteten Kern auf, d.h. einen mit einem metallischen Kernring verstärkten Rand. Dieser verstärkte Rand wird mit einem weiteren und in der Regel metallischen Befestigungsteil an dem jeweiligen Anschlussteil, d.h. am Luftfederdeckel bzw. der einer Anschlussplatte oder an der Luftfederfelge festgeklemmt. Das metallische Befestigungsteil besitzt eine im Querschnitt den verstärkten Rand des Luftfederbalgs von außen umgreifende Form und wird am Anschlussteil oder Deckel mit Schrauben oder Gewindebolzen/Stehbolzen befestigt. Damit wird auch der Rand des Luftfederbalgs so festgeklemmt, dass eine luftdichte Verbindung zwischen Luftfederbalg und Anschlussteil hergestellt ist.

Auch Luftfedern für Schienenfahrzeuge werden üblicherweise mit jeweils einem Wulstring n beiden Enden ausgeführt, mit denen der Balg sicher befestigt und luftdicht abgedichtet wird. Die Fixierung eines Balgendes erfolgt z.B. bei einem Halbbalg in der Regel ebenfalls über ein separat verschraubtes, ringförmiges Befestigungselement, mit dem der Balgflansch mit integriertem Kern oder Wulstring form- und kraftschlüssig gegen eine Platte bzw. Fläche gepresst wird.

Eine ähnliche Anbindung an Deckel bzw. Anschlussplatte weisen Mehrfaltenbälge auf, deren einzelne Falten durch nicht dehnbare, oft metallische Ringe getrennt und konturiert werden, welche den Luftfederbalg über seine Höhe verteilt außen im Faltenabstand umgeben.

Die Wände von Luftfederbälgen sind üblicherweise mit Verstärkungselementen versehen, nämlich Festigkeitsträgern wie Corden, Fadenlagen oder Geweben.

Um die Montage der Einzelteile zu erleichtern, werden Luftfedern in fertigen Untergruppen zusammengebaut und der Weiterverarbeitung zugeliefert. Solch eine Fertigung in Baugruppen oder Komponenten ist heutzutage in allen Bereichen üblich. Bei den vielfältigen Anwendungen von Luftfedern und bei den erheblich unterschiedlichen Belastungsstufen ist es enorm wichtig, dass insbesondere die Komponenten mit einer deutlichen Kennzeichnung versehen sind, die eine fehlerfreien und sichere Zuordnung zum jeweiligen Anwendungsfall ermöglicht.

Eine Luftfeder mit einer solchen Kennzeichnung offenbart die US 2006/0043196 A1. Bei der dort offenbarten Luftfeder befindet sich die Kennzeichnung auf einem Kennzeichnungsträger (label tag) der mindestens einseitig zwischen dem Balgende des Luftfederbalgs und dem jeweiligen Luftfederdeckel festgeklemmt ist. Nachteiligerweise tritt der Kennzeichnungsträger relativ weit aus dem Klemmbereiche hervor, so dass er allen Umgebungseinflüssen und Belastungen ständig ausgesetzt ist.

Eine solche Luftfeder, als Komponente oder Bauteil während des Transports oder im Einsatz am Fahrzeug, muss oft relativ raue Behandlungen und lange Transportwege überstehen und dennoch jederzeit klar und deutlich identifizierbar sein. Darüber hinaus ist die Befestigung der Kennzeichnung am Bauteil starken mechanische Beanspruchungen unterworfen, die die Kennzeichnung als solche unkenntlich machen oder einen Kennzeichnungsträger zerstören oder ablösen können.

Zudem muss eine solche Kennzeichnung es auch ermöglichen, eine elektronische oder elektronisch verarbeitbare Identifizierung von Baugruppen oder Komponenten durchzuführen.

Die US 2006169386 A1 offenbart eine Luftfeder, bei der ein Etikett oder ein Kennzeichnungsstreifen am Luftfederdeckel angebracht bzw. aufgeklebt ist. Der Streifen ist mit Daten oder Beschriftungen auf seiner Unterseite versehen. Nachteilig bei dieser Art der Kennzeichnung ist, dass der Streifen beim Transport beschädigt werden kann und dann die Kennzeichnung nicht mehr erkennbar ist.

Die WO 0127905 A1 offenbart eine Luftfeder mit einer Kennzeichnung, bei der ein Datenträger zwischen Gummibalg und Luftfederdeckel eingeklemmt wird. Auch hier besteht Nachteiligerweise das Problem der Beschädigung während des Transports.

Für die Erfindung bestand daher die Aufgabe, eine Luftfeder bereitzustellen, vorzugsweise als Baugruppe aus Luftfederbalg und montierten endseitigen Deckeln oder Anschlussplatten, die eine sichere, mechanisch stabile und gegen äußere Belastungen unempfindliche Kennzeichnung oder Markierung aufweist, deren Anordnung an oder Verbindung mit den Anschlussteilen möglichst einfach gestaltet ist, wobei die Kennzeichnung zudem nicht dauerhaft allen Umgebungseinflüsse ausgesetzt ist und nur dann sichtbar gemacht werden kann, wenn sie gebraucht wird und die sich ohne Veränderung der bisherigen Konstruktion innerhalb der üblichen Bauteile leicht einpassen lässt.

Gelöst wird diese Aufgabe durch die Merkmale des Hauptanspruchs. Weitere vorteilhafte Ausbildungen sind in den Unteransprüchen offenbart.

Dabei ist der Kennzeichnungs- oder Datenträger zwischen mindestens einer ersten und eine zweite Position verschiebbar ausgebildet ist, wobei die Kennzeichnung oder das Datum in der ersten Position des Kennzeichnungs- oder Datenträgers verdeckt und von außerhalb der Luftfeder unsichtbar oder unlesbar und in der zweiten Position unverdeckt und sichtbar oder lesbar angeordnet ist, wobei der Kennzeichnungs- oder Datenträger in einer Hülle oder in einer Führung, vorzugsweise in einem Führungsrahmen (11) verschiebbar aufgenommen ist und die Hülle oder Führung im Verbindungsbereich zwischen Balgende und gefederter oder ungefederter Masse angeordnet ist.

Dadurch wird erreicht, dass die Kennzeichnung oder Markierung und damit auch der Kennzeichnungs- oder Datenträger nur dann in die zweite Position hervortritt bzw. hervorgeholt werden kann, wenn die Kennzeichnung oder Markierung tatsächlich zur Identifikation gebraucht wird, beispielsweise nach Anlieferung der Luftfeder als Baugruppe zur Montage an das Lkw-Herstellerwerk. Während des vorlaufenden Transports, während des späteren Betriebs und zum Beispiel auch bei Reinigungsmaßnahmen braucht die Kennzeichnung oder Markierung nicht aufzufallen, so dass der Kennzeichnungs- oder Datenträger dann in seiner erste Position verbleiben kann oder in diese zurückgeführt wird.

Mit dem Verschieben des Kennzeichnungs- oder Datenträgers kann natürlich auch eine weitere funktionale Handlung verbunden sein, beispielsweise dadurch, dass beim Verschieben von Position 1 in Position 2 bestimmte Kennzeichnungsteile vom der Kennzeichnungs- oder Datenträger oder von der Kennzeichnung zerstört oder verändert werden, so dass dies ein Hinweis auf eine bereits durchgeführte Kontrolle oder Datenauslesung sein kann.

Durch den erfindungsgemäßen Führungsrahmen vermeidet man zum einen, dass in unerwünschter Weise Kräfte auf dem Kennzeichnungsträger als solchen wirken und man erreicht zum anderen ein relativ leichtes Verschieben zwischen den beiden Positionen.

Eine vorteilhafte Weiterbildung besteht darin, dass Befestigungselemente vorgesehen sind, mit denen das jeweilige Balgende an Deckel bzw. Anschlussplatte luftdicht anschließbar ist, vorzugsweise ausgebildet als Klemm-, Spann- oder Schraubringe. Damit erweitert man die Möglichkeiten der Befestigung auch des Kennzeichnungs- oder Datenträgers, der ja die Kennzeichnung bzw, das Datum trägt und im Verbindungsbereich zwischen Balgende und gefederter oder ungefederter Masse vorgesehen ist. Neben einem Kleben oder einer stoffschlüssigen Verbindung ist damit der Weg eröffnet, auch eine Klemmung des Kennzeichnungs- oder Datenträgers vorzusehen, die auch während der Herstellung der Baugruppe bzw. Komponente bereits auf einfachste Weise erfolgen kann.

Eine weitere vorteilhafte Ausbildung besteht darin, dass der Balg zur Befestigung an Deckel bzw. Anschlussplatte mindestens an einem Balgende eine gegebenenfalls mit einem metallischen Kern versehene wulstartige, ringförmig umlaufende Verdickung aufweist und die Befestigungselemente die ringförmige Verdickung aufnehmen oder umgreifen und mit Anschlussplatte oder Deckel luftdicht verbinden, und bei der der Kennzeichnungs- oder Datenträger zwischen ringförmig umlaufender Verdickung und Anschlussplatte oder Deckel angeordnet ist. Insbesondere dann, wenn der Kennzeichnungs- oder Datenträger zwischen Befestigungselement und Anschlussplatte angeordnet ist ergibt sich eine besonders einfache Möglichkeit der Befestigung, die insbesondere auch während der Komponentenherstellung bereits ausgeführt werden kann.

Eine weitere vorteilhafte Ausbildung besteht darin, dass ein das jeweilige Balgende bzw. Befestigungselement umgebender Stützring an Anschlussplatte oder Deckel zur Anlage des Luftfederbalgs bei Roll- oder Walkbewegungen vorgesehen ist und der Kennzeichnungs- oder Datenträger zwischen Stützring einerseits und Deckel bzw. Anschlussplatte andererseits angeordnet ist. Auch damit eröffnet man eine weitere sehr einfache Möglichkeit der Befestigung des Kennzeichnungs- oder Datenträgers an der Baugruppe "Luftfeder".

Eine weitere vorteilhafte Ausbildung besteht darin, dass der Kennzeichnungs- oder Datenträger bzw. dessen Hülle oder Führung im Verbindungsbereich eingeklemmt oder eingeklebt ist. Wie oben bereits dargestellt, sind dies besonders einfache Möglichkeiten, den Kennzeichnungs- oder Datenträger bzw. dessen Hülle oder Führung mit den übrigen Bauteilen zu verbinden.

Eine weitere vorteilhafte Ausbildung besteht darin, dass die Kennzeichnung oder das Datum bzw. der Kennzeichnungs- oder Datenträger in der ersten Position des Kennzeichnungs- oder Datenträgers durch im Verbindungsbereich befindliche Bauteile verdeckt ist und in der zweiten Position aus den Bauteilen unverdeckt herausragt. Damit lässt sich auf konstruktiv elegante Weise erreichen, dass das äußere Erscheinungsbild der Luftfeder völlig unbeeinflusst ist.

Anhand eines Ausführungsbeispiels soll die Erfindung näher erläutert werden. Es zeigen
- Fig. 1: Eine erfindungsgemäße Luftfeder mit einem Kennzeichnungsträger,
- Fig. 2, 3: den zugehörigen Stützring als einzelnes Element im Querschnitt und in der Draufsicht,
- Fig. 4, 5: den verschiebbaren Kennzeichnungsträger in seinen beiden Positionen.

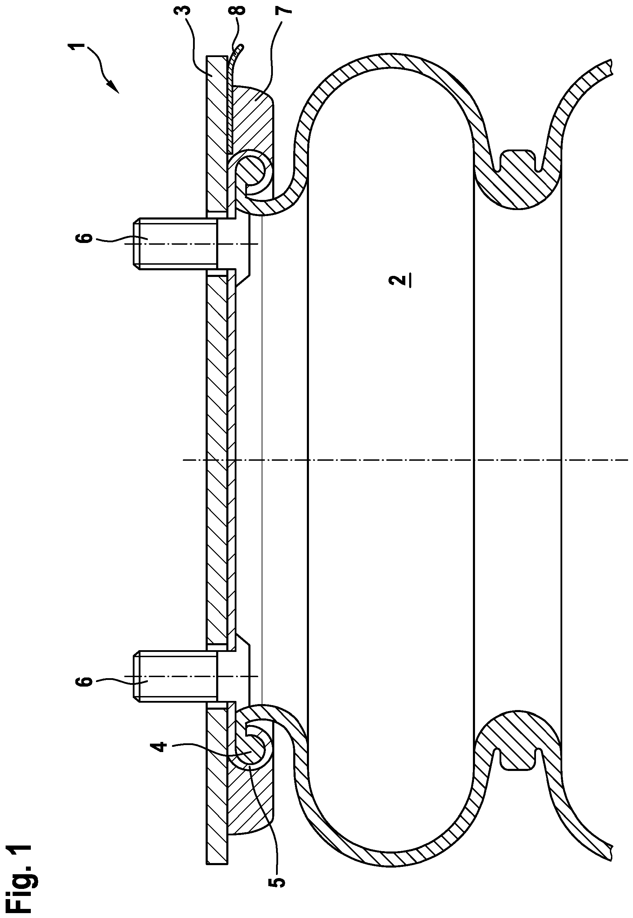

Fig. 1 zeigt lediglich prinzipiell und im Schnitt den oberen Teil einer erfindungsgemäßen Luftfeder 1, die zwischen hier nicht näher dargestellten Massen bzw. Bauteilen angeordnet ist, nämlich einer gefederten und einer ungefederten Masse. Die hier dargestellte Luftfeder wird als Sekundärfeder zwischen einer Karosserie und einem Fahrwerk eines Eisenbahnwaggons benutzt.

Die Luftfeder 1 weist einen als Faltenbalg 2 ausgebildeten Luftfederbalg auf, der an seinen beiden Balgenden an jeweils einem Deckel bzw. einer Anschlussplatte 3 luftdicht befestigt ist. In der Fig. 1 ist dabei nur der obere Deckel bzw. die oberer Anschlussplatte dargestellt.

Zur Befestigung des Faltenbalgs 2 an der Anschlussplatte 3 weist der Balg 2 am oberen Balgende eine wulstartige, ringförmig umlaufende Verdickung 4 auf. Ein ebenfalls ringförmiges Befestigungselement 5 umgreift die ringförmige Verdickung mithilfe einer an ihrem Rand befindlichen Bördelung. Die Bördelung zwischen Befestigungselement 5 und ringförmiger Verdickung 4 ist luftdicht ausgeführt. Das Befestigungselement 5 ist mithilfe von Schrauben 6 mit der Anschlussplatte 3 luftdicht verbunden. Der Faltenbalg ist so mit seinem oberen Ende luftdicht an die Anschlussplatte 3 angeschlossen.

Nicht weiter dargestellt, weil nicht erfindungswesentlich, sind hier die zugehörigen Luftleitungen, Steuerungseinrichtungen und Schaltventile.

In der Figur 1 erkennt man weiterhin, dass ein das obere Balgende bzw. Befestigungselement 5 umgebender Stützring 7 an der Anschlussplatte 3 vorgesehen ist, der zur Abstützung bzw. zur Anlage des Faltenbalgs 2 bei Federungs-, Roll- oder Walkbewegungen vorgesehen ist.

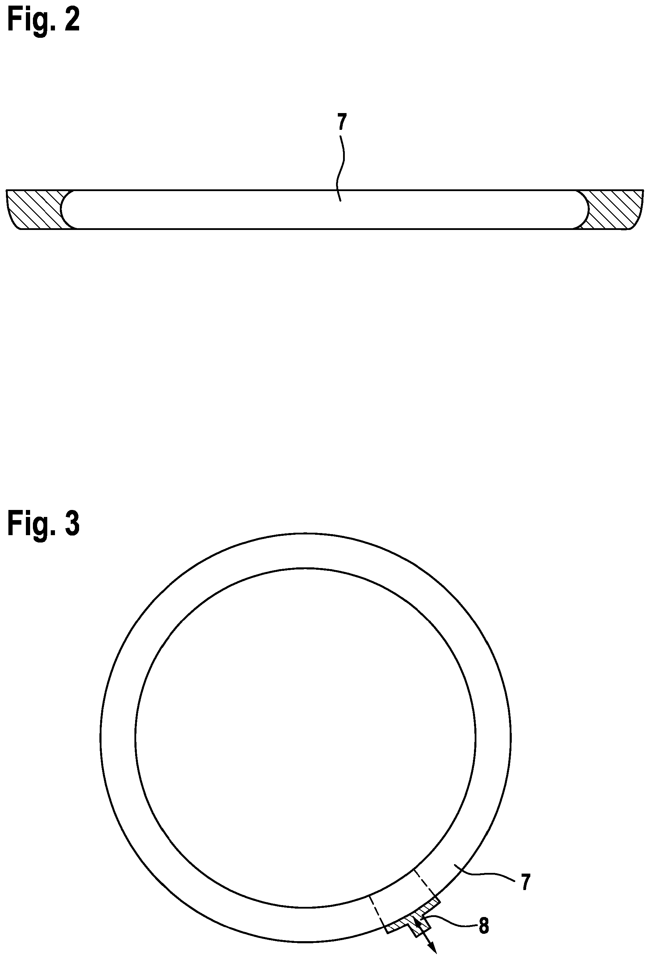

Fig. 2 zeigt den Stützring 7 noch einmal als einzelnes Element im Querschnitt. Figur 3 zeigt den Stützring 7 in der Draufsicht.

In der Zusammenschau der Figuren 1 bis 3 erkennt man nun, dass zwischen Stützring 7 einerseits und Anschlussplatte 3 andererseits ein Kennzeichnungsträger 8 angeordnet ist. Der Kennzeichnungsträger 8 besteht hierbei im Wesentlichen aus einer trapezförmig geschnittenen, stabilen Folie 9, die mit einem maschinenlesbarem QR-Code 10 (Quick Response Code) bedruckt ist, wie sich insbesondere aus der Zusammenschau der Figuren 3 bis 5 ergibt.

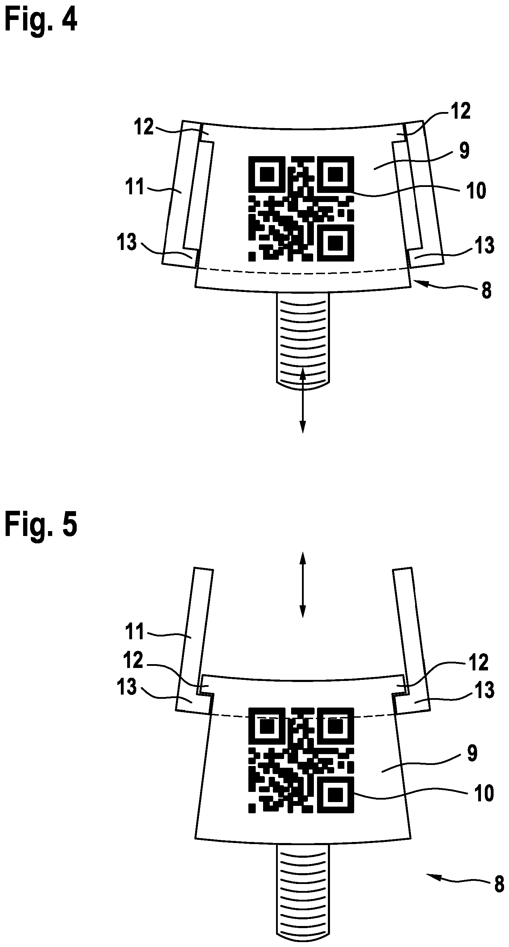

Wie am deutlichsten in den Figuren 4 und 5 dargestellt, ist der Kennzeichnungsträger 8 in einem Führungsrahmen 11 verschiebbar aufgenommen. Der Führungsrahmen 11 wiederum ist zwischen Stützring 7 einerseits und Anschlussplatte 3 andererseits eingeklemmt und zur Sicherung zusätzlich eingeklebt.

Dabei ist der Kennzeichnungsträger 8 im Führungsrahmen 11 beweglich aufgenommen und geführt, so dass der Kennzeichnungsträger 8 bzw. die trapezförmige Folie 9 zwischen der in der Figur 4 dargestellten Position und der in der Figur 5 dargestellten Position hin und her geschoben werden kann, gegebenenfalls gegen einen leichten, durch eine entsprechenden Passung erzeugten Widerstand. Die Kennzeichnung, hier also der QR-Code, ist in der ersten Position des Kennzeichnungsträgers verdeckt und von außerhalb der Luftfeder unsichtbar oder unlesbar und in der zweiten Position unverdeckt und sichtbar oder lesbar angeordnet ist.

Der Kennzeichnungsträger 8 und der Führungsrahmen 11 sind dabei mit komplementär wirkenden Anschlägen 12 und 13 versehen, die verhindern, dass der Kennzeichnungsträger komplett aus den Führungsrahmen entfernt werden kann.

Der Kennzeichnungsträger 8 ist auf diese Weise in der in der Figur 4 gezeigten ersten Position durch im Verbindungsbereich befindliche Bauteile verdeckt, nämlich durch den Stützring 7 und die Anschlussplatte 3, wie dies auch in den Fig. 1 und 3 deutlich wird. In der zweiten und in der Figur 5 dargestellten zweiten Position ragt der Kennzeichnungsträger aus diesen Bauteilen unverdeckt heraus.

### Bezugszeichenliste

### (Teil der Beschreibung)

- 1: Luftfeder
- 2: Faltenbalg
- 3: Anschlussplatte
- 4: ringförmig umlaufende Verdickung
- 5: Befestigungselement
- 6: Schraube
- 7: Stützring
- 8: Kennzeichnungsträger
- 9: trapezförmige Folie
- 10: QR-Code
- 11: Führungsrahmen
- 12: Anschlag
- 13: Anschlag

## Patentansprüche

1. Luftfeder (1), angeordnet zwischen einer gefederten und einer ungefederten Masse, wobei die Luftfeder einen Luftfederbalg (2) aufweist, der an seinen beiden Balgenden an jeweils einem Deckel bzw. einer Anschlussplatte (3) luftdicht befestigt ist und Deckel bzw. Anschlussplatten als Verbindungselemente zur gefederten oder ungefederten Masse ausgebildet sind, wobei im Verbindungsbereich zwischen Balgende und gefederter oder ungefederter Masse ein mit einer Kennzeichnung oder einem Datum (10) versehener Kennzeichnungs- oder Datenträger (8) vorgesehen ist, vorzugsweise in Form einer eine Identifizierungskennzeichnung aufweisende Folie (9), wobei der Kennzeichnungs- oder Datenträger (8) zwischen mindestens einer ersten und einer zweiten Position verschiebbar ausgebildet ist, wobei die Kennzeichnung oder das Datum (10) in der ersten Position des Kennzeichnungs- oder Datenträgers (8) verdeckt und von außerhalb der Luftfeder (1) unsichtbar oder unlesbar und in der zweiten Position unverdeckt und sichtbar oder lesbar angeordnet ist, **dadurch gekennzeichnet, dass** der Kennzeichnungs- oder Datenträger in einer Hülle oder in einer Führung, vorzugsweise in einem Führungsrahmen (11) verschiebbar aufgenommen ist und die Hülle oder Führung im Verbindungsbereich zwischen Balgende und gefederter oder ungefederter Masse angeordnet ist.

2. Luftfeder nach Anspruch 1, bei der mindestens ein Befestigungselement (5) vorgesehen ist, mit denen das jeweilige Balgende an Deckel bzw. Anschlussplatte (3) luftdicht anschließbar ist, vorzugsweise ausgebildet als Klemm-, Spann- oder Schraubringe, und wobei der Kennzeichnungs- oder Datenträgers (8) im Zusammenwirken mit dem Befestigungselement (5) im Verbindungsbereich angeordnet ist.

3. Luftfeder nach Anspruch 1 oder 2, bei der der Balg (2) zur Befestigung an Deckel bzw. Anschlussplatte mindestens an einem Balgende eine gegebenenfalls mit einem metallischen Kern versehene wulstartige, ringförmig umlaufende Verdickung (4) aufweist und die Befestigungselemente (5) die ringförmige Verdickung aufnehmen oder umgreifen und mit Anschlussplatte oder Deckel (3) luftdicht verbinden, und bei der der Kennzeichnungs- oder Datenträger (8, 9) zwischen ringförmig umlaufender Verdickung (4) und Anschlussplatte oder Deckel angeordnet ist, vorzugsweise zwischen Befestigungselement (5) und Anschlussplatte (3).

4. Luftfeder nach einem der Ansprüche 1 bis 3, bei der ein das jeweilige Balgende bzw. Befestigungselement umgebender Stützring (7) an Anschlussplatte oder Deckel zur Anlage des Luftfederbalgs (2) bei Federungs-, Roll- oder Walkbewegungen vorgesehen ist und der Kennzeichnungs- oder Datenträger (8) zwischen Stützring (7) einerseits und Deckel bzw. Anschlussplatte (3) andererseits angeordnet ist.

5. Luftfeder nach einem der Ansprüche 1 bis 4, bei der der Kennzeichnungs- oder Datenträger (8) bzw. dessen Hülle oder Führung (11) im Verbindungsbereich eingeklemmt oder eingeklebt ist.

6. Luftfeder nach einem der Ansprüche 1 bis 5, bei der die Kennzeichnung oder das Datum (10) bzw. der Kennzeichnungs- oder Datenträger (8) in der ersten Position des Kennzeichnungs- oder Datenträgers durch im Verbindungsbereich befindliche Bauteile verdeckt ist und in der zweiten Position aus den Bauteilen unverdeckt herausragt.

## Claims

1. Air spring (1), arranged between a sprung and an unsprung mass, wherein the air spring has an air spring bellows (2) which is fastened air-tight at its two bellows ends to in each case a cover or a connection plate (3), and the covers or connection plates are designed as connection elements to the sprung or unsprung mass, wherein a marker carrier or data carrier (8), preferably in the form of a film (9) having an identification marker, provided with a marker or a datum (10) is provided in the connection region between the bellows end and the sprung or unsprung mass, wherein the marker carrier or data carrier (8) is designed to be displaceable between at least a first and a second position, wherein the marker or the datum (10) is arranged to be concealed and non-visible or non-readable from outside the air spring (1) in the first position of the marker carrier or data carrier (8) and to be unconcealed and visible or readable in the second position, **characterized in that** the marker carrier or data carrier is received so as to be displaceable in a sheath or in a guide, preferably in a guide frame (11), and the sheath or guide is arranged in the connection region between the bellows end and the sprung or unsprung mass.

2. Air spring according to Claim 1, in which at least one fastening element (5) is provided by means of which the respective bellows end can be connected air-tight to the cover or connection plate (3), preferably taking the form of clamping, bracing or screwing rings, and wherein the marker carrier or data carrier (8) is arranged in interaction with the fastening element (5) in the connection region.

3. Air spring according to Claim 1 or 2, in which, for fastening to the cover or connection plate, the bellows (2) has, at least at one bellows end, a bead-like, annularly encircling thickening (4) optionally provided with a metallic core, and the fastening elements (5) receive or engage around the annular thickening and connect it air-tight to the connection plate or cover (3), and in which the marker carrier or data carrier (8, 9) is arranged between the annularly encircling thickening (4) and the connection plate or cover, preferably between the fastening element (5) and connection plate (3).

4. Air spring according to one of Claims 1 to 3, in which a supporting ring (7) surrounding the respective bellows end or fastening element is provided on the connection plate or cover for the bearing of the air spring bellows (2) during suspension, rolling or tumbling movements, and the marker carrier or data carrier (8) is arranged between the supporting ring (7) on the one hand and the cover or connection plate (3) on the other hand.

5. Air spring according to one of Claims 1 to 4, in which the marker carrier or data carrier (8) or its sheath or guide (11) is incorporated in the connection region by clamping or adhesive bonding.

6. Air spring according to one of Claims 1 to 5, in which the marker or the datum (10) or the marker carrier or data carrier (8) is concealed by parts situated in the connection region in the first position of the marker carrier or data carrier and projects unconcealed from the parts in the second position.

## Revendications

1. Ressort pneumatique (1), agencé entre une masse suspendue et une masse non suspendue, le ressort pneumatique présentant un soufflet de ressort pneumatique (2) qui est fixé de manière étanche à l'air à chacune de ses deux extrémités de soufflet à un couvercle ou à une plaque de raccordement (3) et les couvercles ou les plaques de raccordement étant réalisés sous forme d'éléments de liaison avec la masse suspendue ou non suspendue, il étant prévu dans la zone de liaison entre les extrémités de soufflet et la masse suspendue ou non suspendue un support de marquage ou de donnée (8) pourvu d'un marquage ou d'une donnée (10), de préférence sous la forme d'une feuille (9) présentant un marquage d'identification, le support de marquage ou de donnée (8) étant réalisé de manière à pouvoir être déplacé entre au moins une première et une deuxième position, le marquage ou la donnée (10) étant agencé de manière à être caché et invisible ou illisible de l'extérieur du ressort pneumatique (1) dans la première position du support de marquage ou de donnée (8) et de manière à être non caché et visible ou lisible dans la deuxième position, **caractérisé en ce que** le support de marquage ou de donnée (8) est reçu de manière à pouvoir être déplacé dans une enveloppe ou dans un guide, de préférence dans un cadre de guidage (11), et l'enveloppe ou le guide est agencé dans la zone de liaison entre l'extrémité de soufflet et la masse suspendue ou non suspendue.

2. Ressort pneumatique selon la revendication 1, dans lequel il est prévu au moins un élément de fixation (5) avec lequel l'extrémité de soufflet respective peut être raccordée de manière étanche à l'air au couvercle ou à la plaque de raccordement (3), de préférence réalisé sous la forme de bagues de serrage, de tension ou de vissage, et dans lequel le support de marquage ou de donnée (8) est agencé dans la zone de liaison en coopération avec l'élément de fixation (5).

3. Ressort pneumatique selon la revendication 1 ou 2, dans lequel le soufflet (2) présente, pour la fixation au couvercle ou à la plaque de raccordement, au moins à une extrémité de soufflet, un épaississement (4) périphérique annulaire en forme de bourrelet, éventuellement pourvu d'un noyau métallique, et les éléments de fixation (5) reçoivent ou entourent l'épaississement annulaire et le relient de manière étanche à l'air à la plaque de raccordement ou au couvercle (3), et dans lequel le support de marquage ou de donnée (8, 9) est agencé entre l'épaississement (4) périphérique annulaire et la plaque de raccordement ou le couvercle, de préférence entre l'élément de fixation (5) et la plaque de raccordement (3).

4. Ressort pneumatique selon l'une quelconque des revendications 1 à 3, dans lequel une bague de soutien (7) entourant l'extrémité de soufflet respective ou l'élément de fixation sur la plaque de raccordement ou le couvercle est prévue pour l'appui du soufflet de ressort pneumatique (2) lors de mouvements de suspension, de roulement ou de marche, et le support de marquage ou de donnée (8) est agencé entre la bague de soutien (7) d'une part et le couvercle ou la plaque de raccordement (3) d'autre part.

5. Ressort pneumatique selon l'une quelconque des revendications 1 à 4, dans lequel le support de marquage ou de donnée (8) ou son enveloppe ou guide (11) est serré ou collé dans la zone de liaison.

6. Ressort pneumatique selon l'une quelconque des revendications 1 à 5, dans lequel le marquage ou la donnée (10) ou le support de marquage ou de donnée (8) est caché dans la première position du support de marquage ou de donnée par des composants se trouvant dans la zone de liaison et dépasse des composants sans être caché dans la deuxième position.
